# EUROPÄISCHE PATENTANMELDUNG

(11) **EP 3 542 940 A1**
(43) Veröffentlichungstag der Anmeldung: **25.09.2019**
(21) Anmeldenummer: 18162619.3
(22) Anmeldetag: 19.03.2018
(51) Int. Cl.: B23G 5/18

(54) **WIRBELRING MIT UNGLEICHER TEILUNG**

(71) Anmelder: Friedrich Gloor AG, 2543 Lengnau (CH)
(72) Erfinder: Lusti, Hanspeter, 2543 Lengnau BE (CH); Flury, Daniel, 4514 Lommiswil (CH)
(74) Vertreter: BOVARD AG

(57) **Zusammenfassung**

Die vorliegende Erfindung betrifft einen Wirbelring (1) zum Aussenwirbeln um eine Rotationsachse (2), umfassend einen Tragring (10) mit einem Durchgangsloch (11) mit einem Innenumfang, an welchem beabstandet zueinander eine Vielzahl von Aufnahmen (14) ausgebildet sind, in welche jeweils Schneidwerkzeuge (12) mit mindestens einer Schneide (20) mit mindestens einer Schneidkante (21) einsetzbar und befestigbar sind, wobei die Schneidwerkzeuge (12) radial über den Innenumfang in Richtung Rotationsachse (2) ragen, so dass die mindestens eine Schneidkante (21) in Kontakt mit einem sich innerhalb des Durchgangslochs (11) erstreckenden, zu bearbeitenden Werkstücks (31) bringbar ist. Dabei ist eine Vielzahl der Schneidwerkzeuge (12) entlang eines Umfangs des Wirbelrings (1) in einer unregelmässigen Teilung angeordnet.

## Beschreibung

Die vorliegende Erfindung betrifft einen Wirbelring zum Wirbeln um eine Rotationsachse, insbesondere einen solchen Wirbelring zum Aussenwirbeln von Gewinden, Schnecken, Profilen oder Ähnlichem.

### Stand der Technik

Zur Herstellung von umlaufenden, insbesondere aussenliegenden Strukturen, beispielsweise Aussengewinde, Schneckengänge etc. an einem Werkstück, z.B. an einer Welle oder Ähnlichem, sind Wirbelringe bzw. Wirbelköpfe bekannt. Ein herkömmlicher Wirbelring weist ein Durchgangsloch mit einem Innenumfang und eine Mehrzahl von radial in Richtung einer Rotationsachse weisenden Schneidwerkzeugen auf, welche mindestens eine Schneidkante haben. Die Schneidwerkzeuge ragen radial über den Innenumfang in Richtung Rotationsachse, so dass mindestens eine der Schneidkanten spanabhebend oder schneidend an dem Werkstück in einem weitgehenden tangentialen Eingriff steht. Das zu bearbeitende Werkstück ist im Allgemeinen auf einer Werkzeugspindel gelagert und kann innerhalb des Durchganglochs linear bewegt, sowie entlang der Schneidkanten drehbeweglich geführt werden.

Beim Wirbeln kann in Abhängigkeit vom Profil der Schneidwerkzeuge, deren Ausrichtung relativ zum Werkstück und der Abstimmung der Bewegung des Werkstücks relativ zum Wirbelkopf unterschiedliche Profile hergestellt werden. Insbesondere bei langgestreckten Werkstücken mit einem im Verhältnis zur Länge geringen Durchmesser und einer Neigung zur Unwucht stellt sich allerdings das Problem von Schwingungen beim Wirbeln, welche die Präzision der erzeugten Strukturen und die Standzeiten der Schneidwerkzeuge negativ beeinflussen.

Beim Aussenwirbeln ist bekannt, dass der Wirbelring einen Tragring umfasst, an dem Schneidwerkzeuge, z.B. Wendeschneidplatten, plattenförmige Schneidmesser oder Zirkularmesser, entlang eines Innenumfangs des Wirbelrings in einer definierten Teilung in Umfangsrichtung angeordnet sind. Dabei sind an dem Tragring axial offene Aufnahmen bzw. Taschen vorgesehen, in welche Schneidwerkzeuge im Wesentlichen flächig eingesetzt werden, wobei die Schneidkanten der Schneidwerkzeuge in einer Schneidebene liegen und einen Schneidkreis bilden. Die Schneidwerkzeuge sind beispielsweise am Tragring in den Aufnahmen direkt in Position mittels Klemmmitteln oder Schraubverbindung lösbar fixiert, so dass sie auswechselbar und nachstellbar sind.

Dabei entspricht die Aufnahme in Geometrie und Grösse dem aufzunehmenden Schneidwerkzeug. Ferner ist bekannt, dass in schlitzförmigen Taschen Schneidmesser einsetzbar sind, welche im Wesentlichen senkrecht zur Schneidebene ausgerichtet sind. Im Allgemeinen ist die Anzahl der Aufnahmen vorgegeben und nicht veränderlich, wobei aber eine variierende Anzahl von Schneidwerkzeugen unter Berücksichtigung einer gleichmässigen Anordnung derselben aufnehmbar ist. Allerdings neigen entsprechende Tragringe zur Unwucht.

Bedingt durch eine flächige Anordnung eines Schneidwerkzeugs in einer der Rechteckform der Wendeschneidplatte angepasste Aufnahme, weist in Umfangsrichtung des Tragrings die Aufnahme eine entsprechende Breite auf, wodurch die Anzahl der aufnehmbaren Schneidwerkzeuge begrenzt ist. Demnach sind im Allgemeinen am Tragring 3 bis 12 Aufnahmen oder Plattensitze für Schneidwerkzeuge vorgesehen. Plattensitze sind vorzugsweise äquidistant angeordnet, können aber auch in einer gewissen Ungleichverteilung zur Modulation einer Zahneingriffsfrequenz vorgesehen sein.

Das Verfahren des Gewindewirbelns wird zunehmend zur Herstellung von sogenannten Knochenschrauben in der Medizin eingesetzt. Knochenschrauben, welche zum direkten Einschrauben in einen Knochen vorgesehen sind, unterliegen sehr hohen Qualitätsanforderungen. Beispielsweise sollte zur Fixierung eines Implantats das hergestellte Gewinde keine Schneidecken aufweisen und gratfrei mit hoher Oberflächenqualität sein. Insbesondere für einen medizinischen Einsatz werden Materialien wie Edelstahl, Titan oder Titanlegierungen verwendet, für welche das Gewindewirbeln geeignet ist.

Bei Wirbelverfahren im Allgemeinen erweist sich das Auftreten von Schwingungen als problematisch, welche die Laufruhe des Wirbelprozesses und so die zu erzeugende Profilqualität negativ beeinflussen. Dies hat auch Auswirkungen auf die Standzeiten der Schneidwerkzeuge und damit auf die Produktivität des Wirbelns generell.

### Zusammenfassung der Erfindung

Der Erfindung liegt deshalb die Aufgabe zugrunde, einen bekannten Wirbelring weiterzuentwickeln, welcher sich bei hohen Schnittwerten durch eine hohe Laufruhe und reduzierte Schwingungen beim Wirbeln sowie verbesserte Standzeiten auszeichnet.

Diese Aufgabe wird erfindungsgemäss durch die Merkmale des unabhängigen Anspruchs gelöst. Vorteilhafte Ausführungsformen des erfindungsgemässen Wirbelrings sind in den abhängigen Ansprüchen beansprucht.

Aus dem Stand der Technik sind Wirbelringe zum Aussenwirbeln um eine Rotationsachse bekannt, welche einen Tragring mit einem Durchgangsloch mit einem Innenumfang umfassen, an welchem beabstandet zueinander eine Vielzahl von Aufnahmen ausgebildet sind, in welche jeweils Schneidwerkzeuge mit mindestens einer Schneide mit mindestens einer Schneidkante einsetzbar und befestigbar sind, wobei die Schneidwerkzeuge radial über den Innenumfang in Richtung Rotationsachse ragen, so dass die mindestens eine Schneidkante in Kontakt mit einem zu bearbeitenden Werkstück bringbar ist. Das Durchgangsloch am Tragring ist zur Durchführung des zu bearbeitenden Werkstücks ausgebildet. Bekannt ist auch, dass die Schneidwerkzeuge in einer regelmässigen Anordnung an dem Wirbelring angeordnet sind, d.h. in einer Anordnung mit einer regelmässigen Teilung. Ein Abstand der Schneidwerkzeuge zueinander wird dabei angegeben über einen Winkel, den zwei benachbarte Schneidwerkzeuge bezogen auf die Rotationsachse bilden. Bei einer Anordnung der Schneidwerkzeuge in einem äquidistanten Abstand sind benachbarte Schneidwerkzeuge in einem definierten gleichen Teilungswinkel, bzw. Standardteilungswinkel, entlang eines Umfangs des Tragrings zueinander angeordnet.

Im Gegensatz zum Stand der Technik sieht die vorliegende Erfindung einen Wirbelring vor, an welchem eine Vielzahl von Schneidwerkzeugen entlang eines Umfangs des Wirbelrings in einer unregelmässigen Teilung angeordnet ist. Dabei ist vorgesehen, dass die Vielzahl der Schneidwerkzeuge einen Teilungswinkel zwischen benachbarten Schneidwerkzeugen bilden, welcher gegenüber dem Standardteilungswinkel bei regelmässiger Teilungsanordnung im Bereich von +/- 0,5° bis +/- 4° variiert. Demnach können Winkelabstände benachbarter Schneidwerkzeuge voneinander variieren.

Bei einer Bestückung eines Wirbelrings beispielsweise mit neun Schneidwerkzeugen und einer gleichmässigen Teilung entspricht der Standardteilungswinkel 40°. Erfindungsgemäss ist dagegen vorgesehen, dass der Teilungswinkel in einem Bereich von +/- 0,5° bis +/- 4° variiert, d.h. in dem genannten Beispiel variiert der Teilungswinkel benachbarter Schneidwerkzeuge zwischen 36° und 44°, vorzugsweise zwischen 38,5° und 41,5°.

Das beim Wirbelprozess auftretende Schwingungsverhalten ist im Allgemeinen nicht oder nur schwer vorhersehbar und steht in Zusammenhang zum Werkstückgewicht und Werkstückmaterial sowie weiteren Prozessparametern. Um den beim Wirbelprozess auftretenden Schwingungen entgegenzuwirken, wird ein von dem Standardteilungswinkel abweichender Teilungswinkel gemäss einer Ungleichverteilung gewählt. Bedingt durch sich wiederholende unregelmässige Eingriffe der Schneidwerkzeuge in die zu bearbeitende Struktur am Werkstück werden Schwingungen erzeugt, welche den auftretenden Schwingungen bzw. deren Frequenz des Wirbelprozesses entgegenwirken und sie damit verringern. Dabei ist zu berücksichtigen, dass die bei einer Ungleichverteilung auftretenden Belastungen der Schneidwerkzeuge nicht zu gross werden. Insbesondere bei einem grösseren Teilungswinkel als der Standardteilungswinkel sind die Belastung des Schneidwerkzeugs und das abzuarbeitende Schneidvolumen grösser und somit steigt der Verschleiss des Schneidwerkzeugs. Die Grösse der Differenz der Teilungswinkel bei ungleichmässiger Teilung gegenüber dem gleichmässigen Standardteilungswinkel richtet sich nach dem Einsatz des Wirbelrings, dem zu bearbeitenden Material, der Grösse des Wirbelkreises und der Anzahl der an dem Wirbelring angeordneten Schneidwerkzeuge. Unter Berücksichtigung des Wirbelkreises, d.h. dem Durchmesser der Schneidwerkzeuge, die um das zu bearbeitende Werkstück wirbeln und dem Platzbedarf der Schneidwerkzeuge wird danach gestrebt, möglichst viele Schneidwerkzeuge auf einem möglichst kleinen Wirbelkreis anzuordnen.

Mit der ungleichmässigen Anordnung bzw. einer Ungleichverteilung der Schneidwerkzeuge am Umfang des Wirbelrings gemäss der Erfindung werden während des Bearbeitungsverfahrens auftretende Schwingungen reduziert, so dass sich der Wirbelprozess durch eine hohe Laufruhe auszeichnet. Dies wiederum wirkt sich positiv auf die Qualität des hergestellten Profils und die Standzeiten der Schneidwerkzeuge aus, welche einen deutlich reduzierten Verschleiss zeigen. Ferner kann durch die hohe Laufruhe die Vorschubgeschwindigkeit, die Schnittgeschwindigkeit und die Schnitttiefe erhöht werden, so dass der Wirbelprozess effizienter wird.

Am Wirbelring können 3 bis 12 Schneidwerkzeuge aufgenommen werden, wobei Schneidwerkzeuge in einer Ebene oder auch in mehreren Ebenen angeordnet sein können. Die Aufnahmen am Tragring weisen jeweils eine Lagerfläche für das aufzunehmende Schneidwerkzeug auf, welche beispielsweise in einer Ebene senkrecht zur Rotationsachse ausgebildet ist. Jede der Lageflächen wird von Seitenwänden begrenzt, so dass das eingesetzte Schneidwerkzeug an den Seitenwänden anliegt und so lateral festgelegt ist. Ein Schneidwerkzeug kann beispielsweise eine Wendeschneidplatte sein, welche mit einer Plattenfläche auf der Lagerfläche der Aufnahme des Tragrings liegt, die im Wesentlichen in einer Ebene senkrecht zur Rotationsachse liegt. Denkbar sind aber auch Schneidwerkzeuge, welche in schlitzförmigen Taschenaufnahmen im Tragring eingesetzt und demnach parallel zu Rotationsachse gerichtet sind oder auch Schneidwerkzeuge ausgebildet als Zirkularmesser.

Die Schneidwerkzeuge sind für das Aussenwirbeln derart angeordnet, dass eine ausgebildete Schneide radial nach innen in Richtung einer Rotationsachse des Wirbelrings und über den Innenumfang des Tragrings vorsteht. Zur Bearbeitung von Stahl, Titan und anderen Materialien, welche beispielsweise für Knochenschrauben geeignet sind, werden Schneidwerkzeuge beispielsweise aus Vollhartmetall (VHM) oder zumindest teilweise aus polykristallinem Diamant (PKD), kubisch kristallinem Bornitrid (CBN) oder Ähnlichem verwendet.

Ein als Wendeschneidplatte ausgebildetes Schneidwerkzeug kann quaderförmig oder in Form eines gleichseitigen Dreiecks sein, wobei die Form der Aufnahme entsprechend angepasst ist. Die Wendeschneidplatte weist mindestens zwei Schneiden an unterschiedlichen Seiten der Wendeschneidplatte auf, wobei die Schneiden jeweils mindestens eine Schneidkante umfasst. Die Schneiden sind auf das zu erzeugende Profil abgestimmt. Ferner kann eine Schneide mit mehreren Schneidkanten und geformten Bereichen ausgebildet sein, welche eingerichtet sind, um z.B. die Länge eines Spans zu begrenzen und diesen leicht abführen zu können.

Ein als Wendeschneidplatte ausgebildetes Schneidwerkzeug kann mittels eines Befestigungselementes am Tragring fixiert oder in der ausgebildeten Aufnahme klemmend befestigt werden. Insbesondere kann jede einzelne Wendeschneidplatte mittels einer Schraube fixiert werden, welche durch ein zentral in der Wendeschneidplatte ausgebildetes Durchgangsloch in eine an jeder Lagerfläche der Aufnahmen ausgebildete Gewindebohrung einschraubbar und versenkbar ist. Demnach sind die einzelnen Wendeschneidplatten form- und kraftschlüssig mit der jeweiligen Aufnahme verbunden und an dem Tragring fixiert.

Zur Erzeugung der ungleichen Teilung am Wirbelring sind die Aufnahmen entsprechend versetzt zueinander ausgebildet. Dies gilt insbesondere bei der Herstellung von Schrauben durch einen Wirbelprozess. Auch andere Massnahmen sind je nach Einsatzgebiet des Wirbelprozesses möglich, um eine Ungleichverteilung der Schneidwerkzeuge zu erreichen, beispielsweise verschiebliche Seitenflächen der Aufnahmen.

Letztlich handelt es sich bei dem Vorgang des Wirbelns um eine Fräsbearbeitung, welche beeinträchtigt ist durch einen Instabilität des zu bearbeitenden stangenartigen Werkstücks und/oder einem Spiel in Führungsbuchsen. Zur verbesserten Gewindequalität des erzeugten Profils können neben der erfindungsgemässen ungleichmässigen Anordnung der Schneidwerkzeuge weitere Massnahmen vorgesehen werden, um während des Wirbelprozesses auftretende Schwingungen und Vibrationen weiter zu reduzieren.

In einer Ausführungsform wird zur Leistungssteigerung des Wirbelprozesses vorgeschlagen, ein an dem Schneidwerkzeug ausgebildeter Drallwinkel, auch als Seitenspanwinkel bezeichnet, gegenüber dem Drallwinkel herkömmlicher Wendeschneidplatten zu variieren. Herkömmlicherweise ist der Drallwinkel einer beim Wirbeln eingesetzten Wendeschneidplatte0°, d.h. er beträgt 90° gegenüber der Längsachse der Wendeschneidplatte. Erfindungsgemäss kann an der Wendeschneidplatte ein Drallwinkel erzeugt werden, welcher bis zu +/-15°, bevorzugt +/- 12°, beträgt und in eine oder in beide Richtungen ausgebildet ist. Dabei kann an einer Wendeschneidplatte seitlich schräg zur Achse des Schneidwerkzeuges mindestens ein Schrägungswinkel angeschliffen sein, welcher einer Spirale nachempfunden ist. Die Leistungsaufnahme einer einzelnen Wendeschneidplatte wird durch diese Massnahme reduziert, so dass eine höhere Schnitttiefe, eine höhere Vorschubgeschwindigkeit und/oder eine gesteigerte Schnittgeschwindigkeit realisiert werden kann.

In einer Ausführungsform des erfindungsgemässen Wirbelrings, welcher in einem Wirbelprozess eingesetzt ist, in dem ein grosses Spanvolumen anfällt, können an dem Wirbelring unterschiedlich ausgebildete Schneidwerkzeuge in einer definierten Anordnung angeordnet sein. Demnach sind Schneidwerkzeuge eines ersten Typs und Schneidwerkzeuge eines zweiten Typs in einer bestimmten Anordnung an dem Wirbelring aufgenommen. Schneidwerkzeuge des ersten Typs weisen eine Schneide zur Herstellung eines ersten Profils auf, beispielsweise werden damit ein Grund und eine erste Flanke eines zu erzeugenden Profils geschält. Schneidwerkzeuge des zweiten Typs dagegen weisen eine Schneide auf, welche ein zweites Profil erzeugen, d.h. beispielsweise den Grund vervollständigen und eine zweite Flanke erzeugen. Erste und zweite Profile überlagern sich derart, dass das vorgegebene Profil erzeugt wird, wobei dieser Prozess eine günstigere und leichtere Spanbildung und -abführung zeigt und zu einem exakteren Profil beiträgt.

### Kurzbeschreibung der Zeichnungen

Im Folgenden wird die Erfindung anhand der in den Figuren dargestellten Ausführungsbeispiele näher erläutert. Es zeigen:
Figur 1 eine Aufsicht eines erfindungsgemässen Wirbelrings mit Wendeschneidplatten gemäss einer ersten Ausführungsform;
Figur 2 eine Aufsicht eines erfindungsgemässen Wirbelrings mit Wendeschneidplatten gemäss einer zweiten Ausführungsform;
Figur 3 eine Aufsicht eines erfindungsgemässen Wirbelrings mit Wendeschneidplatten gemäss einer dritten Ausführungsform;
Figur 4 eine schematische Darstellung einer zu erzeugenden Profilform mit dem erfindungsgemässen Wirbelring der Figur 3;
Figur 5a eine Aufsicht einer Wendeschneidplatte; und
Figur 5b eine Seitenansicht der Wendeschneidplatte gemäss Figur 5a;
Figur 5c eine perspektivische Ansicht der Wendeschneidplatte gemäss Fig. 5a.

### Detaillierte Beschreibung der Ausführungsformen der Erfindung

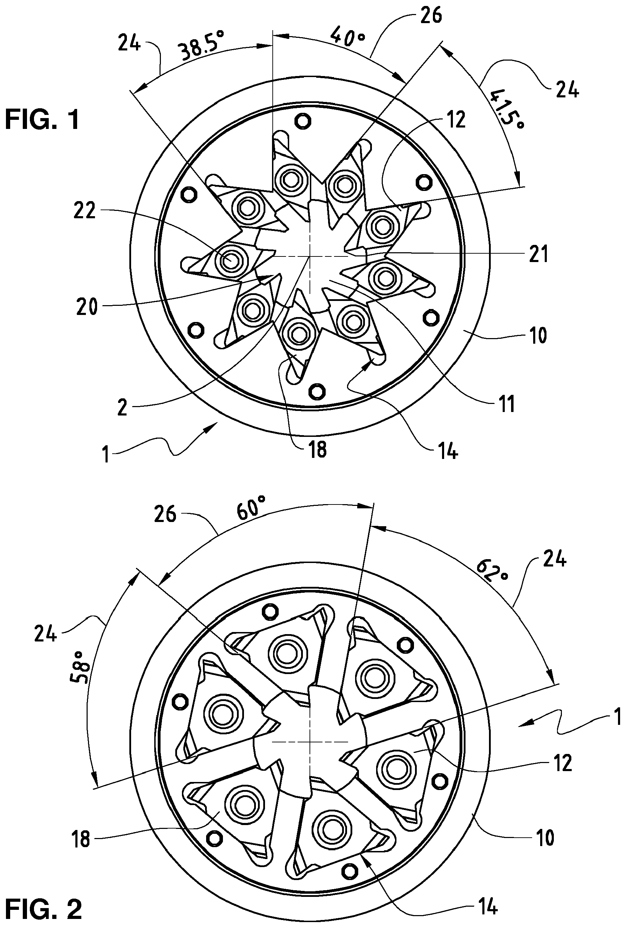

In Figur 1 ist schematisch eine Aufsicht auf einen Wirbelring 1 gemäss einer ersten Ausführungsform der Erfindung dargestellt, umfassend einen Tragring 10 mit eingesetzten Schneidwerkzeugen 12, welche um ein Durchgangsloch 11 mit einem Innenumfang radial um eine Rotationsachse 2 angeordnet sind. In der dargestellten Ausführungsform weist der Tragring 10 mehrere, insgesamt neun, im Wesentlichen radial ausgerichtete Aufnahmen 14 auf, in welche jeweils ein plattenförmiges Schneidwerkzeug 12 aufnehmbar ist. Dabei sind die Form der Schneidwerkzeuge 12 und diejenige der Aufnahme 14 hinsichtlich Gestalt und Grösse aufeinander abgestimmt, so dass Seitenflächen der plattenförmigen Schneidwerkzeuge 12 senkrecht zur Drehebene des Wirbelrings 1 verlaufen. Dabei liegen die Seitenflächen der Schneidwerkzeuge 12 an Seitenflächen der Aufnahmen 14 an, so dass sie in radialer Richtung fixiert sind. Die in Fig. 1 dargestellten Schneidwerkzeuge 12 sind als quaderförmige Wendeschneidplatten 18 ausgebildet. Die Wendeschneidplatten 18 weisen mindestens an gegenüberliegenden Seiten Schneiden 20 auf, welche mindestens eine Schneidkante 21 umfassen. Ferner können Spanleitstufen ausgebildet sein, welche ein Ableiten des sich bildenden Spans aus der Bearbeitungszone erleichtert und die Spanlänge begrenzt.

Die Aufnahme 14 ist jeweils axial begrenzt, so dass sie eine Lagerfläche 16 (nicht dargestellt) aufweist, auf welche die Schneidwerkzeuge 12 mit einer Plattenfläche jeweils gelagert sind.

Um das Schneidwerkzeug 12 in jeweiligen Aufnahme 14 form- und kraftschlüssig zu befestigen, ist eine zentrale Durchgangsbohrung 22 vorgesehen, in welche ein Schraubelement eingesetzt und in ein an dem Tragring 10 in der jeweiligen Aufnahme 14 vorgesehene Gewindebohrung eingeschraubt wird.

Gemäss der Erfindung ist die Anordnung der Aufnahmen 14 und damit die Anordnung der Schneidwerkzeuge 12 nicht äquidistant. Benachbarte Aufnahmen 14 schliessen zwischen sich einen Winkel 24, 26 ein, welcher einen Standardteilungswinkel 26 einer gleichmässigen Teilung und/oder einen Teilungswinkel 24 umfasst, welcher um +/- 0,5° bis +/- 4° gegenüber dem Standardteilungswinkel 26 variiert. In dem dargestellten Ausführungsbeispiel mit neun Schneidwerkzeugen 12 beträgt ein regelmässiger Teilungswinkel 40°, d.h. der Standardteilungswinkel 26 zwischen ersten Seitenflächen benachbarter Schneidwerkzeuge 12 beträgt 40°. Erfindungsgemäss betragen Teilungswinkel 24 zwischen ersten Seitenflächen benachbarter Schneidwerkzeuge 12 von 36° bis 44°, hier dargestellt 38,5° bzw. 41,5°.

Figur 2 zeigt einen Wirbelring 1 mit einem Tragring 10 und daran in Aufnahmen 14 aufgenommenen Schneidwerkzeugen 12, wobei die Schneidwerkzeuge 12 als Wendeschneidplatten 18 mit gleichseitiger Dreiecksform ausgebildet sind. Bestückt ist der Wirbelring 1 mit sechs Schneidwerkzeugen 12, wobei der Standardteilungswinkel 26 60° beträgt. Dargestellt sind erfindungsgemäss variierende Teilungswinkel 24, welche in einem Bereich zwischen 58° bis 62° liegen.

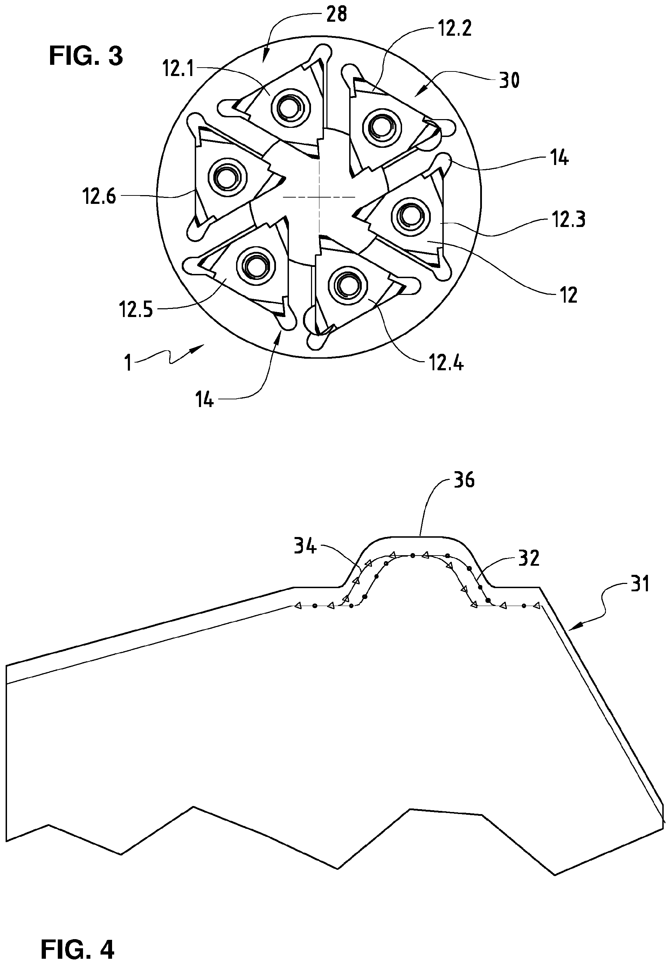

Figur 3 zeigt ein weiteres Ausführungsbeispiel eines Wirbelrings 1 gemäss der Erfindung, wobei in den vorgesehenen Aufnahmen 14 Schneidwerkzeuge 12 aufgenommen sind. Ein Teil der aufgenommenen Schneidwerkzeuge 12, in der dargestellten Ausführungsform die Schneidwerkzeuge 12.1, 12.3, 12.5, sind entsprechend eines ersten Typs 28 ausgebildet und die Schneidwerkzeuge 12.2, 12.4 und 12.6 entsprechend gemäss eines zweiten Typs 30. Details der Schneidwerkzeuge 12 werden in Bezug auf die Figur 4 erläutert.

Aus Figur 4 wird ersichtlich, wie sich die zwei Typen 28, 30 der Schneidwerkzeuge 12 ergänzen. Die Schneidwerkzeuge 12.1, 12.3, 12.5 des ersten Typs 28 sind derart ausgebildet, dass sie an einem Werkstück 31 ein erstes Profil 32 erzeugen, insbesondere einen Grund und eine erste Flanke. Die Schneidwerkzeuge 12.2, 12.4, 12.6 des zweiten Typs 30 erzeugen ein zweites Profil 34, insbesondere den Grund und eine zweite Flanke. Beide Profile 32, 34 überlagern sich derart, dass ein Vollprofil 36 erzeugt wird, welches dem definierten zu erzeugenden Profil entspricht.

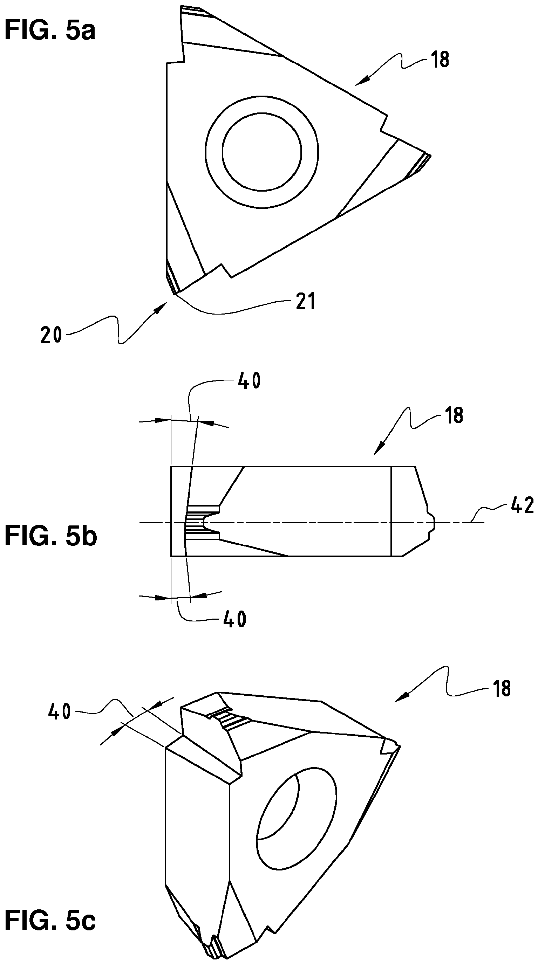

In Figur 5a wird eine Wendeschneidplatte 18 als ein Schneidwerkzeug 12 im Detail dargestellt, welches die Form eines gleichseitigen Dreiecks aufweist und demnach Schneiden 20 und Schneidkanten 21 aufweist. Ausgehend von dieser Wendeschneidplatte 18 ist in Figur 5b eine Seitenansicht dargestellt, aus welcher ein Drallwinkel 40 ersichtlich ist. Der Drallwinkel 40, den eine Spannut mit einer Senkrechten zur Längsachse 42 der Wendeschneidplatte 18 einschliesst, kann bis zu 12° betragen. Ferner kann, wie dargestellt, der Drallwinkel 40 von zwei Richtungen angeschliffen sein. In Figur 5c ist eine perspektivische Ansicht der Wendeschneidplatte 18 gezeigt und wobei ebenfalls der Drallwinkel 40 aus einer anderen Perspektive ersichtlich ist.

## Patentansprüche

1. Wirbelring (1) zum Aussenwirbeln um eine Rotationsachse (2), umfassend
- einen Tragring (10) mit einem Durchgangsloch (11) mit einem Innenumfang, an welchem beabstandet zueinander eine Vielzahl von Aufnahmen (14) ausgebildet sind, in welche
- jeweils Schneidwerkzeuge (12) mit mindestens einer Schneide (20) mit mindestens einer Schneidkante (21) einsetzbar und befestigbar sind, wobei die Schneidwerkzeuge (12) radial über den Innenumfang in Richtung Rotationsachse (2) ragen, so dass die mindestens eine Schneidkante (21) in Kontakt mit einem innerhalb des Durchgangslochs (11) sich erstreckenden zu bearbeitenden Werkstücks (31) bringbar ist, **dadurch gekennzeichnet, dass** eine Vielzahl der Schneidwerkzeuge (12) entlang eines Umfangs des Wirbelrings (1) in einer unregelmässigen Teilung angeordnet ist.

2. Wirbelring (1) gemäss Anspruch 1, **dadurch gekennzeichnet, dass** ein Teilungswinkel (24) bei der unregelmässigen Teilung der Vielzahl der Schneidwerkzeuge (12) gegenüber einem Standardteilungswinkel (26) mit regelmässiger Teilungsanordnung eine Abweichung im Bereich von +/- 0,5° bis 4° aufweist.

3. Wirbelring (1) gemäss einem der Ansprüche 1 oder 2, **dadurch gekennzeichnet, dass** 3 bis 12 Schneidwerkzeuge (12) an dem Wirbelring (1) aufnehmbar sind.

4. Wirbelring (1) gemäss einem der vorhergehenden Ansprüche, **dadurch gekennzeichnet, dass** an dem Wirbelring (1) Schneidwerkzeuge (12) unterschiedlichen Typs (28, 30) aufnehmbar sind.

5. Wirbelring (1) gemäss Anspruch 4, **dadurch gekennzeichnet, dass** Schneidwerkzeuge (12.1, 12.3, 12.5) eines ersten Typs (28) zur Herstellung eines ersten Profils (32) und Schneidwerkzeuge (12.2, 12.4, 12.6) eines zweiten Typs (30) zur Herstellung eines zweiten Profils (34) an dem Wirbelring (1) anordenbar sind.

6. Wirbelring (1) gemäss einem der vorhergehenden Ansprüche, **dadurch gekennzeichnet, dass** die Schneidwerkzeuge (12) als Wendeschneidplatten (18) ausgebildet sind.

7. Wirbelring (1) gemäss Anspruch 6, **dadurch gekennzeichnet, dass** die als Wendeschneidplatte (18) ausgebildete Schneidwerkzeuge (12) mit einem Drallwinkel (40) ausgebildet ist.

8. Wirbelring (1) gemäss Anspruch 7, **dadurch gekennzeichnet, dass** der Drallwinkel (40) mit einer Senkrechten zur Längsachse (42) der Wendeschneidplatte (18) einen Winkel von +/- 15°, bevorzugt von +/- 12°einschliesst.

9. Wirbelring (1) gemäss einem der Ansprüche 1 bis 5, **dadurch gekennzeichnet, dass** die Schneidwerkzeuge (12) als Zirkularmesser ausgebildet ist.

10. Wirbelring (1) gemäss einem der vorhergehenden Ansprüche, **dadurch gekennzeichnet, dass** die Aufnahmen (14) in Form und Gestalt dem aufzunehmenden Schneidwerkzeug (12) entsprechen und in einer Anordnung gemäss der unregelmässigen Teilung am Wirbelring (1) ausgebildet sind.

11. Wirbelring (1) gemäss einem der vorhergehenden Ansprüche, **dadurch gekennzeichnet, dass** die Schneidwerkzeuge (12) in den Aufnahmen (14) in einer Ebene senkrecht zur Rotationsachse (2) angeordnet und fixierbar sind.

12. Wirbelring (1) gemäss Anspruch 11, **dadurch gekennzeichnet, dass** jedes Schneidwerkzeug (12) auf einer Lagerfläche der entsprechenden Aufnahme (14) gelagert und jeweils mittels eines Befestigungselements fixierbar ist.
